# EUROPEAN PATENT APPLICATION

(11) **EP 2 733 819 A2**
(43) Date of publication of application: **21.05.2014**
(21) Application number: 13155584.9
(22) Date of filing: 18.02.2013
(51) Int. Cl.: H02J 7/02

(54) **Wireless charging device**

(30) Priority: 16.11.2012 TW 101142848
(71) Applicant: Primax Electronics Ltd, Taipei (TW)
(72) Inventor: Chen, Chih Hung, Taipei (TW)
(74) Representative: Rees, Simon John Lewis

(57) **Abstract**

A wireless charging device includes a circuit board, a heat-absorbing plate, an inductive transmitter coil, and a casing. The inductive transmitter coil is disposed on the heat-absorbing plate. The heat-absorbing plate is disposed on the circuit board. The circuit board, the heat-absorbing plate and inductive transmitter coil are covered by the casing. The heat-absorbing plate includes at least one opening for increasing the entropy value of the heat-absorbing plate.

## Description

### FIELD OF THE INVENTION

The present invention relates to a wireless charging device, and more particularly to a wireless charging device with a heat-absorbing plate.

### BACKGROUND OF THE INVENTION

For providing electric power to an electronic device, the electronic device usually has a built-in chargeable battery. In a case that the residual electricity quantity of the chargeable battery within the electronic device is insufficient, the chargeable battery may be charged by a charging device. The conventional charging device comprises a power adapter and a connecting wire. After the power adapter is plugged into a power source and the connecting wire is plugged into the electronic device, electric circuit may be transmitted from the conventional charging device to the electronic device through the connecting wire. However, the use of the conventional charging device still has some drawbacks. For example, before the electronic device is charged by the conventional charging device, the electronic device and the connecting wire are held by the both hands of the user, respectively. Consequently, the connecting wire may be plugged into the electronic device. After the charging operation is completed, the electronic device and the connecting wire should be respectively held by the both hands of the user again. Consequently, the connecting wire may be pulled from the electronic device. In other words, the use of the charging device is not user-friendly.

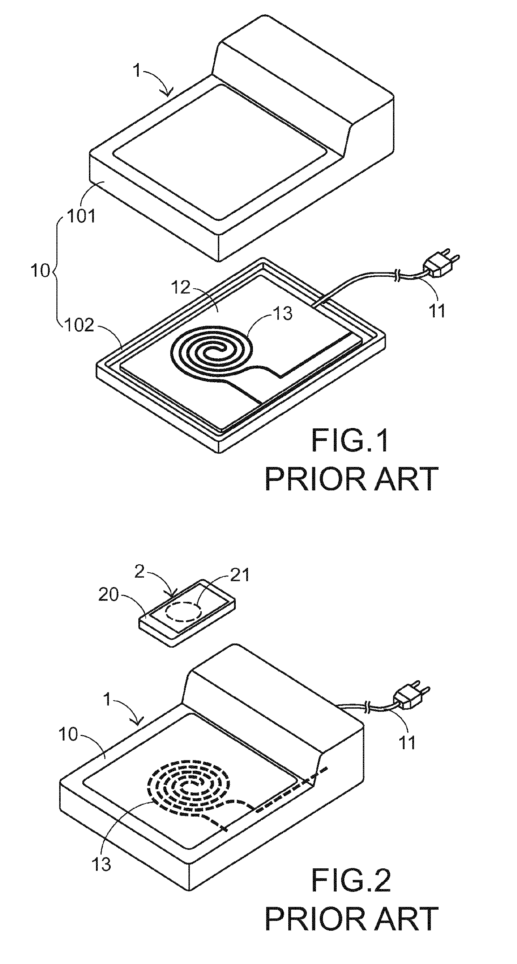

For solving the drawbacks from the wired charging technology of using the connecting wire, with increasing development of a wireless charging technology, a wireless charging device for wirelessly charging the electronic device has been introduced into a market. FIG. 1 is a schematic exploded view illustrating a conventional wireless charging device. As shown in FIG. 1, the conventional wireless charging device 1 comprises a casing 10, a power cable 11, a circuit board 12, and an inductive transmitter coil 13. The casing 10 comprises an upper cover 101 and a lower base 102. The upper cover 101 is placed over the lower base 102 to cover the lower base 102. In the conventional wireless charging device 1, a part of the power cable 11 is exposed outside the casing 10 in order to be connected with a power socket (not shown) to acquire electric power. The circuit board 12 is disposed within the casing 10 and electrically connected with the power cable 11. Consequently, an electric current from the power socket may be transmitted to the circuit board 12 through the power cable 11. The inductive transmitter coil 13 is disposed on the circuit board 12. After the electric current from the power socket is transmitted through the power cable 11 and the circuit board 12, the electric current may flow through the inductive transmitter coil 13 to result in an electromagnetic effect.

FIG. 2 schematically illustrates the relationship between the conventional wireless charging device of FIG. 1 and a conventional portable electronic device. As shown in FIG. 2, the conventional portable electronic device 2 comprises an electronic device housing 20, an inductive receiver coil 21, and a chargeable battery (not shown). The inductive receiver coil 21 of the conventional portable electronic device 2 is disposed within the electronic device housing 20. When the electronic device housing 20 of the conventional portable electronic device 2 is located near or contacted with the casing 10 of the conventional wireless charging device 1, the inductive receiver coil 21 is close to the inductive transmitter coil 13. Due to the electromagnetic effect generated by the inductive transmitter coil 13, the inductive receiver coil 21 generates an inductive current to charge the chargeable circuit.

Please refer to FIGS. 1 and 2. The circuit board 12 and the inductive transmitter coil 13 are both disposed within the casing 10. In a case that dust or foreign liquid is introduced into the inner space of the casing 10, the circuit board 12 and the inductive transmitter coil 13 are possibly damaged. The circuit board 12 and the inductive transmitter coil 13 within the casing 10 are protected by the casing 10. In addition, and the circuit board 12 and the inductive transmitter coil 13 are isolated from the surroundings through the casing 10.

However, due to the isolation of the casing 10, the convection of transferring heat by moving air between the inner space of the casing 10 and the surroundings fails to take place. Under this circumstance, the heat generated by the circuit board 12 and the inductive transmitter coil 13 may be continuously accumulated within the casing 10 and difficult to be dissipated away. Consequently, after the conventional wireless charging device 1 has been used for a certain time period, the temperature of the conventional wireless charging device 1 is continuously elevated and fails to be effectively reduced. Eventually, the high temperature may cause damage of the conventional wireless charging device 1. In other words, heat accumulation is a noticeable potential danger to the use security.

Therefore, there is a need of providing a wireless charging device with good sealed isolation efficacy and capable of maintaining a safe temperature in order to obviate the drawbacks encountered from the prior art. The applicant keeps on carving unflaggingly to develop an improved and reasonable wireless charging device through wholehearted experience and research.

### SUMMARY OF THE INVENTION

The present invention provides a wireless charging device with good sealed isolation efficacy and capable of maintaining a safe temperature.

In accordance with an aspect of the present invention, there is provided a wireless charging device for allowing an inductive receiver coil of an electronic device to generate an inductive current. The wireless charging device includes a circuit board, a heat-absorbing plate, and an inductive transmitter coil. The heat-absorbing plate is contacted with the circuit board for absorbing thermal energy which is generated by the circuit board. The heat-absorbing plate includes at least one opening. The inductive transmitter coil is disposed on the heat-absorbing plate and electrically connected with the circuit board.

In an embodiment, the at least one opening of the heat-absorbing plate is at least one perforation or at least one blind hole.

In an embodiment, the heat-absorbing plate is made of a material with a volumetric heat capacity in the range between 3.40 J/cc-°C and 3.80 J/cc-°C.

In an embodiment, the wireless charging device further includes a casing for sealing and covering the circuit board, the inductive transmitter coil and a portion of the heat-absorbing plate.

In an embodiment, the heat-absorbing plate further includes at least one protrusion part, wherein the at least one protrusion part is protruded outside the casing.

In an embodiment, the wireless charging device further includes a power cable. A first end of the power cable is connected with the circuit board, and the power cable is penetrated through the casing, so that a second end of the power cable is connected with a power source, wherein an electric current from the power source is transmitted to the inductive transmitter coil through the power cable

In an embodiment, the casing is an encapsulation structure, and the encapsulation structure is made of thermosetting resin.

In an embodiment, the electronic device further includes an electronic device housing and a chargeable battery. The electronic device housing is used for accommodating the inductive receiver coil. When the inductive receiver coil of the electronic device is located near the inductive transmitter coil, the inductive receiver coil generates the inductive current. The chargeable battery is disposed within the electronic device housing and connected with the inductive receiver coil for storing the inductive current as electric power.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 is a schematic exploded view illustrating a conventional wireless charging device;

FIG. 2 schematically illustrates the relationship between the conventional wireless charging device of FIG. 1 and a conventional portable electronic device;

FIG. 3 is a schematic exploded view illustrating a wireless charging device according to a first embodiment of the present invention;

FIG. 4 is a schematic cross-sectional view illustrating the wireless charging device according to the first embodiment of the present invention;

FIG. 5 schematically illustrates the relationship between an electronic device and the wireless charging device according to the first embodiment of the present invention;

FIG. 6 is a schematic exploded view illustrating a wireless charging device according to a second embodiment of the present invention; and

FIG. 7 is a schematic perspective view illustrating the wireless charging device of FIG. 6.

### DETAILED DESCRIPTION OF THE PREFERRED EMBODIMENT

The present invention provides a wireless charging device. The wireless charging device is used for wirelessly charging an electronic device. Since the wireless charging technology is widely used and well known in the art, the principles of generating the inductive current by an inductive receiver coil of the electronic device are not redundantly described herein.

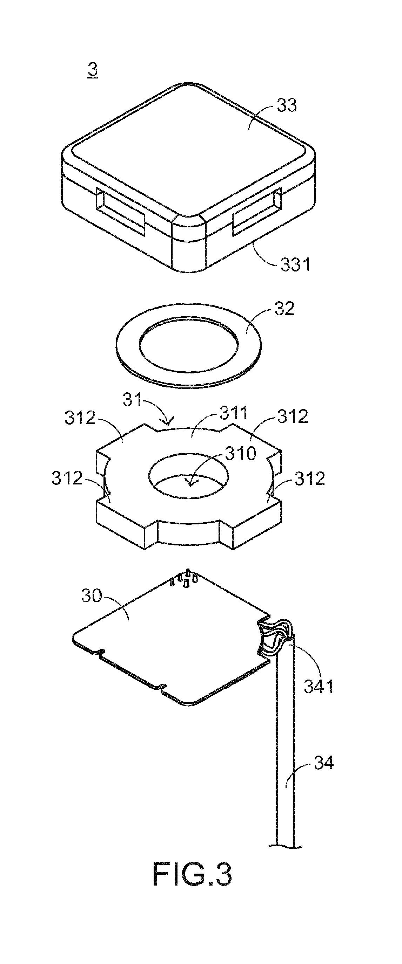

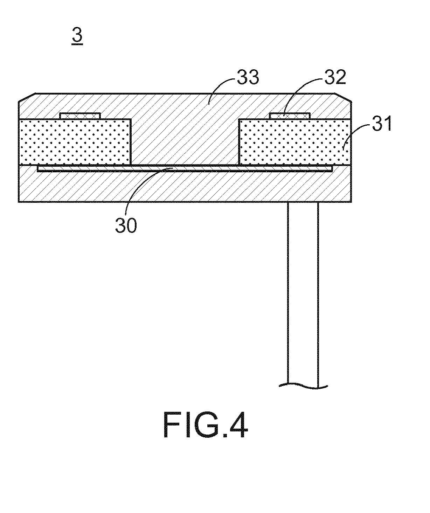

Please refer to FIGS. 3 and 4. FIG. 3 is a schematic exploded view illustrating a wireless charging device according to a first embodiment of the present invention. FIG. 4 is a schematic cross-sectional view illustrating the wireless charging device according to the first embodiment of the present invention. As shown in FIGS. 3 and 4, the wireless charging device 3 comprises a circuit board 30, a heat-absorbing plate 31, an inductive transmitter coil 32, and a casing 33. The inductive transmitter coil 32 is contacted with the heat-absorbing plate 31. The heat-absorbing plate 31 is contacted with the circuit board 30. That is, the inductive transmitter coil 32, the heat-absorbing plate 31 and the circuit board 30 are sequentially stacked on each other. Moreover, the circuit board 30, the heat-absorbing plate 31 and the inductive transmitter coil 32 are covered by the casing 33. Consequently, the circuit board 30, the heat-absorbing plate 31 and the inductive transmitter coil 32 are disposed within the casing 33 to receive a shielding effect. Moreover, the inductive transmitter coil 32 is electrically connected with the circuit board 30 to receive an electric current from the circuit board 30. The heat-absorbing plate 31 is arranged between the inductive transmitter coil 32 and the circuit board 30 for absorbing the thermal energy that is generated by the inductive transmitter coil 32 and the circuit board 30. It is preferred that the heat-absorbing plate 31 used in the wireless charging device 3 of the present invention is a high entropy structure and/or made of a high volumetric heat capacity material, which will be illustrated later. By means of the heat-absorbing plate 31, the equilibrium temperature of the inner components (e.g. the inductive transmitter coil 32 and the circuit board 30) of the wireless charging device 3 is lower than the equilibrium temperature of the inner components of the conventional wireless charging device 1.

In particular, if the entropy value of any object increases, the quantity of the absorbed thermal energy per unit temperature correspondingly increases. For allowing the heat-absorbing plate 31 of the wireless charging device 3 to absorb more thermal energy in response to the increase of a specified temperature, the entropy value of the heat-absorbing plate 31 should be increased. In this embodiment, the heat-absorbing plate 31 comprises at least one opening 310 for increasing the entropy value. In this embodiment, the opening 310 is a perforation. Under this circumstance, if identical thermal energy is absorbed, the heat-absorbing plate 31 with the opening 310 has a much lower equilibrium temperature when compared with the heat-absorbing plate 31 having no opening (not shown). Consequently, when the temperature reaches the equilibrium state, the temperature of the wireless charging device 3 using the heat-absorbing plate 31 with the opening 310 is obviously lower than the temperature of the wireless charging device using the heat-absorbing plate without the opening.

On the other hand, the heat-absorbing efficacy of the heat-absorbing plate without any perforation and the heat-absorbing efficacy of the heat-absorbing plate 31 with the perforation 310 may be compared according to experiments. In designing the experiments, the heat-absorbing plate without any perforation and the heat-absorbing plate 31 with the perforation 310 should have the same heat-dissipating surface area. For example, the diameter of the perforation 310 of the heat-absorbing plate 31 may be set as 6mm and the thickness of the heat-absorbing plate 31 may be set as 3mm. Under this circumstance, the perforation 310 may be considered as a cylindrical hole. In comparison with the heat-absorbing plate without any perforation, the original surface areas of the top circle and the bottom circle are lost (i.e. -18π square millimeter) but an extra surface area of the inner wall of the cylindrical hole is created (i.e. +18π square millimeter), wherein -18π + 18π = 0. In other words, the surface areas of these two cases are substantially identical. Consequently, the influence of the surface area on the heat dissipation of air convection can be ignored. Experiments are carried out by using the same material according to the above conditions. In each test, the temperature reaches the equilibrium state after 60 minutes. For saving the test time, the total time of each test cycle is set as 90 minutes. The average data of the ambient temperature and the temperature of the heat-absorbing plate during the last 15 minutes of the teat cycle are listed in the following table.

**Table:**

| | Ambient temperature | Temperature of heat-absorbing plate |
|---|---|---|
| aluminum heat-absorbing plate (rude) | Last Avg= 27.52°C | Last Avg=53.36°C |
| | | Δ=25.84°C |
| aluminum heat-absorbing plate with blind hole or perforation | Last Avg= 28.09°C | Last Avg=49.75°C |
| | | Δ=21.65°C |

From the above measurement data, it is demonstrated that the aluminum heat-absorbing plate with a blind hole or a perforation has an equilibrium temperature 49.75°C, which is obviously lower than the equilibrium temperature of the aluminum heat-absorbing plate without the blind hole or the perforation (53.36°C). Moreover, the temperature difference between the temperature of the aluminum heat-absorbing plate with the blind hole or the perforation and the ambient temperature is lower than the temperature difference between the rude aluminum heat-absorbing plate and the ambient temperature. It means that the aluminum heat-absorbing plate with the blind hole or the perforation has better heat-absorbing efficiency.

Moreover, for increasing the heat capacity of the heat-absorbing plate 31, the heat-absorbing plate 31 is preferably made of a high volumetric heat capacity material. For example, the high volumetric heat capacity material is a material with a heat capacity in the range between 3.40 J/cc-°C and 3.80 J/cc-°C. For example, the high volumetric heat capacity material is a cold rolled carbon steel (SPCC). In a case that the volume is fixed, the quantity of the thermal energy absorbed by the high volumetric heat capacity material per unit temperature is higher than the quantity of the thermal energy absorbed by the low volumetric heat capacity material per unit temperature. Consequently, for absorbing a certain quantity of thermal energy, the equilibrium temperature of the high volumetric heat capacity material is lower than the equilibrium temperature of the low volumetric heat capacity material.

In this embodiment, the casing 33 of the wireless charging device 3 is an encapsulation structure in order to prevent dust or foreign liquid from being introduced into the inner space of the casing 33. Consequently, the possibility of causing damage of the circuit board 30 or the inductive transmitter coil 32 will be minimized. Moreover, since the circuit board 30, the heat-absorbing plate 31 and the inductive transmitter coil 32 are tightly sealed by the encapsulation structure, the encapsulation structure has good waterproof and dustproof characteristics. It is preferred that the encapsulation structure is made of thermosetting resin. Similar to the casing of the conventional wireless charging device, the encapsulation structure of the wireless charging device 3 fails to reduce temperature by using convection to remove heat. However, in comparison with the conventional wireless charging device, the wireless charging device 3 further comprises the additional heat-absorbing plate 31 to reduce temperature by heat conduction and heat absorption. Moreover, the heat-absorbing plate 31 comprises a main body 311 and plural protrusion parts 312. The main body 311 of the heat-absorbing plate 31 is stacked on the circuit board 30. The plural protrusion parts 312 are extended from the main body 311 of the heat-absorbing plate 31. Moreover, the plural protrusion parts 312 are partially extended outside the circuit board 30.

The heat-absorbing plate 31 is arranged between the inductive transmitter coil 32 and the circuit board 30. Consequently, during operations of the inductive transmitter coil 32, the circuit board 30 and the electronic components (not shown) on the circuit board 30, the generated heat can be absorbed by the main body 311 of the heat-absorbing plate 31. Moreover, since the portions of the plural protrusion parts 312 which are exposed outside the casing 33 are contacted with the ambient air, the heat can be further exhausted to the surroundings of the casing 33 through the plural protrusion parts 312.

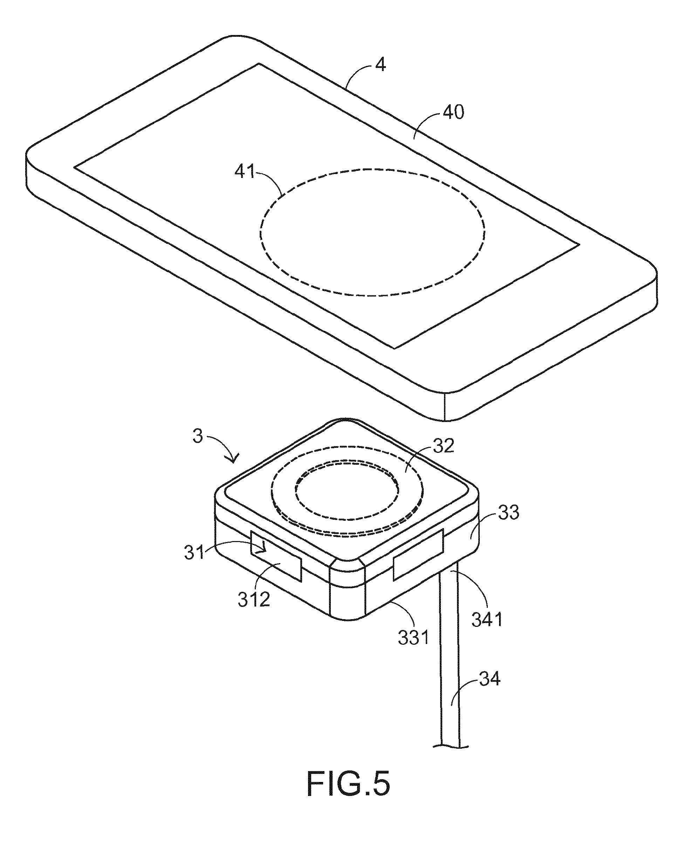

FIG. 5 schematically illustrates the relationship between an electronic device and the wireless charging device according to the first embodiment of the present invention. Please refer to FIGS. 3, 4 and 5. A first end 341 of the power cable 34 is connected with the circuit board 30. In addition, the power cable 34 is penetrated through the casing 33, and thus a second end (not shown) of the power cable 34 is connected with a power source (not shown) for receiving an electric current from the power source and transferring the electric current to the inductive transmitter coil 32. Consequently, the inductive transmitter coil 32 results in an electromagnetic effect. Moreover, the power cable 34 is penetrated through the casing 33 and perpendicular to a bottom surface 331 of the casing 33. In this embodiment, the main body 311 and the plural protrusion parts 312 are integrally formed with each other, and the inductive transmitter coil 32 is wound to have a circular profile. In addition, the electronic device 4 is a mobile phone, and an inductive receiver coil 41 of the electronic device 4 is also wound to have a circular profile.

Moreover, the inductive receiver coil 41 is accommodated within an electronic device housing 40 of the electronic device 4. When the electronic device housing 40 is located near the casing 33 or the electronic device housing 40 is placed on the casing 33, the inductive receiver coil 41 within an electronic device housing 40 and the magnetic field generated by the inductive transmitter coil 32 interact with each other. Consequently, the inductive receiver coil 41 generates an inductive current. Moreover, a chargeable battery (not shown) is disposed within the electronic device housing 40 and electrically connected with the inductive receiver coil 41. The inductive current from the inductive receiver coil 41 may be stored in the chargeable battery and stored as the electric power.

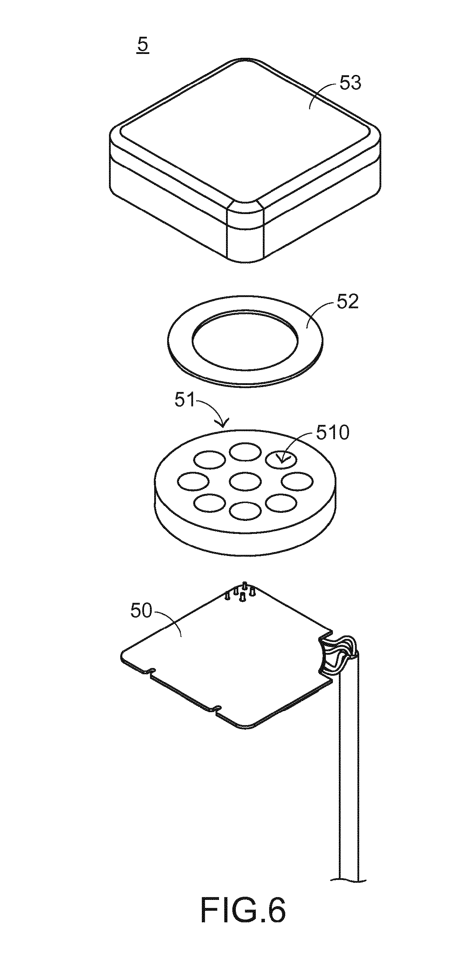

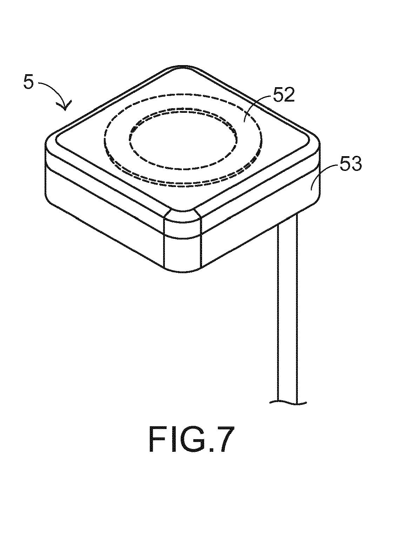

Hereinafter, a wireless charging device according to a second embodiment of the present invention will be illustrated with reference to FIGS. 6 and 7. FIG. 6 is a schematic exploded view illustrating a wireless charging device according to a second embodiment of the present invention. FIG. 7 is a schematic perspective view illustrating the wireless charging device of FIG. 6. In this embodiment, the wireless charging device 5 comprises a circuit board 50, a heat-absorbing plate 51, an inductive transmitter coil 52, and a casing 53. The inductive transmitter coil 52 is contacted with the heat-absorbing plate 51. The heat-absorbing plate 51 is contacted with the circuit board 50. Moreover, the circuit board 50, the heat-absorbing plate 51 and the inductive transmitter coil 52 are covered by the casing 53. In comparison with the first embodiment, the heat-absorbing plate 51 is completely covered by the casing 53 of the wireless charging device 5 according to the second embodiment. Since the heat-absorbing plate 51 is not exposed outside the casing 53, the waterproof and dustproof efficacy of the casing 53 is enhanced. Moreover, the heat-absorbing plate 51 comprises plural openings 510. The number of the openings 510 may be varied according to the practical requirements. It is noted that only one opening 510 or more openings 510 are helpful to increase the entropy value of the overall heat-absorbing plate 51. Moreover, the positions of the openings 510 and the shapes of the openings 510 (e.g. blind holes or perforations) are not restricted as long as the entropy value of the heat-absorbing plate 51 can be effectively increased.

From the above descriptions, the present invention provides a wireless charging device with a heat-absorbing plate. By increasing the entropy value of the heat-absorbing plate and/or using the heat-absorbing plate made of a high volumetric heat capacity material, the heat-absorbing plate can absorb more thermal energy in response to the increase of a specified temperature. That is, the heat-absorbing plate is helpful to absorb the heat that is generated by the circuit board and the inductive transmitter coil. Under this circumstance, even if the heat fails to be removed by air convection, the heat-absorbing plate can provide good temperature-controlling efficacy. Consequently, the overall wireless charging device is not overheated, and the safety of using the wireless charging device is enhanced.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A wireless charging device for allowing an inductive receiver coil of an electronic device to generate an inductive current, said wireless charging device comprising:
a circuit board;
a heat-absorbing plate contacted with said circuit board for absorbing thermal energy which is generated by said circuit board, wherein said heat-absorbing plate comprises at least one opening; and
an inductive transmitter coil disposed on said heat-absorbing plate and electrically connected with said circuit board.

2. The wireless charging device according to claim 1, wherein said at least one opening of said heat-absorbing plate is at least one perforation or at least one blind hole.

3. The wireless charging device according to claim 1, wherein said heat-absorbing plate is made of a material with a volumetric heat capacity in the range between 3.40 J/cc-°C and 3.80 J/cc-°C.

4. The wireless charging device according to claim 1, further comprising a casing for sealing and covering said circuit board, said inductive transmitter coil and a portion of said heat-absorbing plate.

5. The wireless charging device according to claim 4, wherein said heat-absorbing plate further comprises at least one protrusion part, wherein said at least one protrusion part is protruded outside said casing.

6. The wireless charging device according to claim 5, further comprising a power cable, wherein a first end of said power cable is connected with said circuit board, and said power cable is penetrated through said casing, so that a second end of said power cable is connected with a power source, wherein an electric current from said power source is transmitted to said inductive transmitter coil through said power cable.

7. The wireless charging device according to claim 6, wherein said casing is an encapsulation structure, and said encapsulation structure is made of thermosetting resin.

8. The wireless charging device according to claim 1, wherein said electronic device further comprises:
an electronic device housing for accommodating said inductive receiver coil, wherein when said inductive receiver coil of said electronic device is located near said inductive transmitter coil, said inductive receiver coil generates said inductive current; and
a chargeable battery disposed within said electronic device housing and connected with said inductive receiver coil for storing said inductive current as electric power.
